# EUROPÄISCHE PATENTSCHRIFT

(11) **EP 1 890 812 B1**
(45) Veröffentlichungstag und Bekanntmachung des Hinweises auf die Patenterteilung: **19.08.2009**
(21) Anmeldenummer: 06828785.3
(22) Anmeldetag: 09.06.2006
(51) Int. Cl.: B01J 35/04, F01N 3/28

(54) **HERSTELLUNG VON, INSBESONDERE GROSSEN, WABENKÖRPERN FÜR DIE MOBILE ABGASNACHBEHANDLUNG**
PRODUCTION OF, IN PARTICULAR LARGE, HONEYCOMB BODIES FOR MOBILE EXHAUST GAS AFTERTREATMENT
PRODUCTION D'UN CORPS EN NID D'ABEILLES, EN PARTICULIER DE GRANDES DIMENSIONS, POUR LE TRAITEMENT ULTERIEUR MOBILE DE GAZ D'ECHAPPEMENT

(30) Priorität: 17.06.2005 DE 102005028044
(43) Veröffentlichungstag der Anmeldung: 27.02.2008
(73) Patentinhaber: Emitec Gesellschaft für Emissionstechnologie mbH, 53797 Lohmar (DE)
(72) Erfinder: HODGSON, Jan, 53840 Troisdorf (DE)
(74) Vertreter: Rössler, Matthias
(86) Internationale Anmeldenummer: PCT/EP2006/005533
(87) Internationale Veröffentlichungsnummer: WO 2007/031122

(56) Entgegenhaltungen:
- WO-A-90/03220
- WO-A-97/23273
- DE-A1- 4 025 434

## Beschreibung

Die vorliegende Erfindung betrifft einen Wabenkörper, der ein Gehäuse und eine Mehrzahl von Lagen mit gekrümmten Verlauf und einer vorgegebenen Länge umfasst, wobei die Lagen jeweils wenigstens eine zumindest teilweise strukturierte Metallfolie umfassen, so dass eine Vielzahl von Kanälen mit einem Kanalquerschnitt gebildet ist. Darüber hinaus werden ein Verfahren zur Herstellung eines Wabenkörpers sowie eine besondere Verwendung des Wabenkörpers vorgeschlagen. Wabenkörper dieser Art werden insbesondere zur Abgasnachbehandlung im Automobil-Bereich eingesetzt.

Solche metallischen Wabenkörper werden bevorzugt mit Metallfolien aufgebaut und als Trägerkörper für eine katalytisch aktive, eine adsorbierende; eine oxidierende, eine reduzierende und/oder eine weitere Beschichtung in Abgasanlagen mobiler Verbrennungskraftmaschinen eingesetzt. Aufgrund der dort herrschenden, extremen thermischen und dynamischen Belastungen ist es von besonderer Bedeutung, eine dauerhafte Verbindung zwischen den Metallfolien untereinander bzw. auch zwischen den Metallfolien und dem Gehäuse zu gewährleisten. Üblicherweise werden die Metallfolien miteinander sowie mit dem Gehäuse fügetechnisch verbunden, insbesondere durch Sintern, Hartlöten und/oder Schweißen. Hierzu ist es erforderlich, dass an den gewünschten Verbindungsstellen ausreichend Kontaktstellen zwischen den benachbarten Metallfolien bzw. den Metallfolien und dem Gehäuse vorliegen, die als Basis für die Verbindung dienen können.

Zur Gewährleistung einer stabilen Verbindung der Metallfolien mit dem Gehäuse geht aus der EP 0 245 737 B1 hervor, dass durch die Verkürzungen der gewellten Blechlagen gegenüber den glatten Blechlagen um einen vorgegebenen Abstand erreicht werden kann, dass die Enden der Blechlagen das Mantelrohr berühren und sich daran anschmiegen. Aufgrund dieses Anschmiegens ist eine feste Verbindung zum Mantelrohr bei verschiedenen Berührungswinkeln leichter zu bewerkstelligen.

Aus der WO 2005/033484 geht ein Verfahren zur Herstellung eines metallischen Wabenkörpers mit einer Lagenlängendifferenz hervor, bei dem eine Mehrzahl von glatten Metallfolien und zumindest teilweise strukturieren Metallfolien in einem Gehäuse angeordnet werden, wobei die glatten Metallfolien eine erste Länge und die strukturierten Metallfolien eine zweite Länge haben und die Differenz der ersten Länge und der zweiten Länge in Abhängigkeit einer Vorspannung gewählt wird. In Anbetracht der Tatsache, dass bei der herkömmlichen Herstellung solcher Wabenkörper die strukturierten Metallfolien deformiert werden, wenn sie mit erheblicher Vorspannung in das Gehäuse eingedrückt werden, soll mit der in der WO 2005/033484 vorgeschlagenen Herstellungsmethode gleichwohl ein gleichmäßiges Anliegen der Enden der Metallfolien sichergestellt werden.

Insbesondere bei einer Ausgestaltung von Wabenkörpern, bei denen die Metallfolien nicht spiralförmig aufgewickelt oder nur geschichtet sind, haben sich jedoch bei der Herstellung Zonen stärkerer Deformierung und schlechterer Ausbildung von fügetechnischen Verbindungen ergeben. Dies ist beispielsweise mit der unsymmetrischen Wickelart der Metallfolien zu begründen. Damit besteht jedoch gerade im Hinblick auf die Serienfertigung die Gefahr ungleichmäßig gestalteter Wabenkörper, die Regionen mit mehr oder weniger stark deformierten Kanalquerschnitten aufweisen. Dies beeinflusst beispielsweise auch das Strömungsverhalten eines Abgases durch einen solchen Wabenkörper hindurch, so dass unter Umständen eine Ausrichtung des Wabenkörpers zum Strömungsprofil des Abgases erforderlich sein könnte.

Darüber hinaus haben sich gerade bei der Herstellung von großen Wabenkörpern, beispielsweise für den stationären Einsatz oder für Lastkraftwagen, weitere Schwierigkeiten gezeigt. So sind insbesondere die Handhabung großer Metallfolienpakete und der beim Wickeln entstehenden Kräfte schwer prozesssicher kontrollierbar. Mit zunehmendem Durchmesser sind auch die Auswirkungen einer Asymmetrie beim Wickeln bzw. die zum Wickeln erforderlichen Kräfte deutlich höher. Gelingt es nicht, die Metallfolien zu einem Körper zu wickeln bzw. winden, der im Wesentlichen der Kontur des Innenbereichs eines Gehäuses entspricht, müssen große Kräfte beim Eindrücken des Körpers in das Gehäuse aufgebracht werden, wobei unter Umständen infolge der immer dünnwandiger ausgeführten Gehäuse eine Deformierung des Gehäuses selbst stattfinden kann, was zu Problemen bei der Integration in ein Abgassystem führen kann.

Hiervon ausgehen ist es Aufgabe der vorliegenden Erfindung, die mit Bezug auf den Stand der Technik geschilderten Probleme zu reduzieren bzw. zu lösen. Dabei soll insbesondere ein Wabenkörper angegeben werden, der sich durch eine besonders gleichmäßige Ausgestaltung der Kanalquerschnitte auszeichnet, wobei insbesondere definierte Verbindungspunkte zwischen den Metallfolien bzw. den Metallfolien und dem Gehäuse realisiert werden. Darüber hinaus soll ein Verfahren zur Herstellung eines solchen Wabenkörpers angegeben werden, wobei insbesondere die Herstellung von großen Wabenkörpern mit geringem Kraftaufwand prozesssicher ermöglicht werden soll. Bevorzugt soll auch angegeben werden, wie Vorrichtungen zum Wickeln derartiger großer Wabenkörper angepasst werden können, um Wabenkörper gleich bleibender Qualität auch in Serie herstellen zu können. Schließlich sollen auch Verwendungen für einen solchen Wabenkörper angegeben werden.

Diese Aufgaben werden gelöst mit einem Wabenkörper gemäß den Merkmalen des Patentanspruchs 1 sowie einem Verfahren zur Herstellung eines Wabenkörpers mit den Merkmalen des Patentanspruchs 6. Besonders bevorzugte Ausgestaltungen sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen.

Der erfindungsgemäße Wabenkörper umfasst ein Gehäuse und eine Mehrzahl Lagen mit gekrümmten Verlauf und einer vorgegebenen Länge, die jeweils wenigstens eine zumindest teilweise strukturierte Metallfolie umfassen, so dass eine Vielzahl von Kanälen mit einem Kanalquerschnitt gebildet ist, bei dem die Mehrheit der Lagen mit zueinander verschiedenen Längen so ausgeführt ist, dass der Kanalquerschnitt von mindestens 95% der Kanäle übereinstimmt.

Eine "Lage" ist so gestaltet, dass sie zumindest eine Reihe von Kanälen bildet. Dies kann beispielsweise durch Stapelung von strukturierten Metallfolien, einer glatten und einer strukturierten Metallfolie, zwei glatten und einer dazwischen angeordneten strukturierten Metallfolie erfolgen. Die Struktur der Metallfolie, die bevorzugt über die gesamte Länge einer Lage ausgebildet ist, ist üblicherweise der einer Sinus-Welle ähnlich, sie kann jedoch auch als Zick-Zack und/oder als Rechteck ausgeführt sein. In Folge des Aneinanderliegens der Metallfolien und durch die Bereitstellung der Struktur werden Kanäle gebildet, die regelmäßig von mindestens zwei der Metallfolien begrenzt sind. Dadurch wird ein Kanalquerschnitt der Kanäle definiert. Der Kanalquerschnitt hat insbesondere eine Halbkreis-ähnliche, Glocken-ähnliche, rechteckige, Omega-förmige oder eine ähnliche Gestalt. Bevorzugt ist die Gestalt des Kanalquerschnitts über die gesamte Lage gleich.

Die Metallfolie ist bevorzugt aus einem hochtemperaturfesten und korrosionsbeständigen Material. Hierfür eignet sich insbesondere ein Stahlwerkstoff mit hohen Anteilen von Aluminium und Chrom. Die Metallfolien sind bevorzugt mit einer Foliendicke im Bereich kleiner 0,15 mm ausgeführt, insbesondere in einem Bereich von 0,02 mm bis 0,12 mm. Grundsätzlich kann die Metallfolie auch mit Öffnungen, Durchbrechungen oder einer die Struktur überlagernde Mikrostruktur (Leitflächen, Noppen, etc.) ausgeführt sein.

Hier wird nun vorgeschlagen, dass die Mehrheit der Lagen mit der zueinander verschiedenen Längen ausgeführt ist. Das bedeutet zunächst, dass der Wabenkörper mit zumindest zwei Lagen gebildet ist. Bevorzugt weist der Wabenkörper eine Mehrzahl von Lagen auf, die größer als 5, 10 oder sogar 20 ist. Die Lagen können in mehreren Gruppen angeordnet und dann verwunden werden, dann folgen alle Lagen einer Gruppe jeweils einem Verlauf, der von dem der weiteren Gruppe(n) verschieden ist. Ebenso ist es auch möglich, dass alle Lagen aufeinander gestapelt und so zu der Wabenstruktur umgeformt wurden, so dass sich bei allen Lagen im Wesentlichen derselbe Verlauf ergibt. Dabei können unterschiedliche Wickeltypen bzw. Formen des Verlaufs der Lagen gebildet sein, insbesondere eine Spiralform, eine S-Form, eine V-Form oder eine W-Form. Der Wickeltyp kann beispielsweise auch unter Berücksichtigung der Ausgestaltung des Gehäuses gewählt werden, wobei grundsätzlich jeder Gehäusequerschnitt einsetzbar ist, insbesondere ein runder, ein ovaler, ein polygonaler, ein dreieckiger oder ein ähnlicher Gehäusequerschnitt. All diesen Wickeltypen ist gemein, dass die Lagen mit einem gekrümmten Verlauf angeordnet sind, wobei die Lage bevorzugt vollständig gekrümmt ist, also keine Ebenenabschnitte aufweist. Unerheblich ist jedoch, wie der Verlauf gekrümmt ist, so können beispielsweise unterschiedliche Krümmungsradien, konkave und/oder konvexe Abschnitte, Wendestellen, Sattelstellen oder dergleichen vorliegen.

Dieser gekrümmte Verlauf und gegebenenfalls auch die Querschnittsform des Gehäuses führen nun zu unterschiedlichen Unformungsgraden der Lagen, so dass sie nach dem Wickeln, Verschlingen und/oder Winden eine äußere Kontur bilden, die bei gleicher Lagenlänge nicht mit dem Gehäusequerschnitt übereinstimmt. Deshalb war bislang der Herstellungsprozess so ausgelegt, dass die Lagen eine solche Länge aufwiesen, dass der gesamte Gehäusequerschnitt sicher ausgefüllt war, wobei die darüber hinausragenden Abschnitt der Lage beim Eindrücken in das Gehäuse deformiert wurden.

Von dieser Vorgehensweise wendet sich die Erfindung erstmalig ab, da hier vorgeschlagen wird, die Lagenlänge für jede einzelne Lage so zu wählen, dass die Enden der Lagen vor dem Einsetzen in das Gehäuse eine Kontur bilden, die im Wesentlichen dem Gehäusequerschnitt entspricht. In Anbetracht der Tatsache, dass hierbei eine Vielzahl unterschiedlicher Gehäusequerschnitte betrachtet werden können, ist zumindest die Mehrheit der Lagen mit zueinander verschiedenen Lagenlängen ausgeführt. Besonders bevorzugt sind alle Längen der im Wabenkörper angeordneten Lagen mit einer unterschiedlichen Länge ausgeführt. Ein solches Konzept wurde bislang nicht in Betracht gezogen, da erhebliche Schwierigkeiten bei der Handhabung der unterschiedlichen Lagen und deren Positionierung zueinander zu erwarten waren.

Hier wurde jedoch herausgefunden, dass gerade bei großen Wabenkörpern, die beispielsweise einen Durchmesser größer 150 mm oder sogar größer 200 mm aufweisen (wie sie neben stationären Anwendungen auch insbesondere im LKW-Bereich eingesetzt werden), die Integration der Metallfolien in ein Gehäuse prozesssicher und unter Einsatz relativ geringer Kräfte stattfinden kann, so dass nahezu keine Deformationen der Struktur mit der Metallfolie und damit eine sehr homogene Wabenstruktur gebildet wird. Dies führt neben einem verbesserten Strömungsverhalten des Abgases durch einen solchen Wabenkörper insbesondere auch zu einem definierten Kontakt der Metallfolien zueinander bzw. der Metallfolien hin zum Gehäuse, so dass die Ausbildung fügetechnischer Verbindungen prozesssicher und lokal definiert erfolgen kann. Dies wiederum hat zur Folge, dass das gerade bei großen Wabenkörpern beachtliche thermische Ausdehnungsverhalten der Metallfolien zueinander bzw. zwischen Metallfolie und Gehäuse gezielt und dauerhaft eingestellt werden kann.

Bei dem erfindungsgemäßen Wabenkörper stimmt der Kanalquerschnitt von mindestens 95 % der Kanäle überein. Ganz besonders bevorzugt sind mindestens 98 % aller Kanalquerschnitte gleich ausgeführt und ganz besonders bevorzugt ist eine Ausgestaltung, bei der alle vollständig nur von Metallfolien begrenzten Kanäle den gleichen Kanalquerschnitt aufweisen. Dies wird insbesondere aufgrund der unterschiedlichen Längen der Lagen möglich, die so gewählt sind, dass die Lagenenden ohne wesentliche Deformation einfach an dem Gehäuse auslaufen, wobei auf glatte Endabschnitte der strukturierten Metallfolien zur Sicherstellung eines Anschmiegens an dem Gehäuse verzichtet werden kann und gleichwohl ein Kontakt hin zum Gehäuse sichergestellt ist. Klarstellend sei an dieser Stelle darauf hingewiesen, dass der Kanalquerschnitt auch dann noch als "übereinstimmend" angesehen wird, wenn übliche Fertigungstoleranzen vorliegen.

Auch vorteilhaft ist der erfindungsgemäße Wabenkörper, wenn die Mehrzahl der Lagen stoffschlüssig untereinander und mit dem Gehäuse verbunden sind.

Darüber hinaus von Vorteil ist es, wenn beim erfindungsgemäßen Wabenkörper die Enden der Lagen über den Umfang direkt an das Gehäuse insbesondere auch an gekrümmte Gehäuseabschnitte stoßen und die sich daraus ergebenden Berührpunkte bevorzugt mit fügetechnischen Verbindungen ausgeführt sind. Weiter wird vorgeschlagen, dass die Mehrheit der Metallfolien mit zueinander verschiedenen Längen ausgeführt ist. Damit ist insbesondere gemeint, dass auch die Metallfolien innerhalb einer Lage mit zueinander verschiedenen Längen ausgeführt sein können. Die Länge der Lage ergibt sich in diesem Fall aus dem Mittelwert der Längen der Metallfolien einer Lage. In Anbetracht der Tatsache, dass die Lagen eine Höhe im Bereich kleiner 10 mm und insbesondere kleiner 5 mm aufweisen, wird bei dieser Ausgestaltung des Wabenkörpers eine Anpassung sogar bei solch geringem unterschiedlichen Krümmungsverhalten der benachbarten Metallfolien vorgenommen.

Bei besonderen Anwendungen kann vorteilhaft es sein, dass das Gehäuse zumindest einen gekrümmten Gehäuseabschnitt und zumindest einen Teil der Lagen an diesem mindestens einem gekrümmten Gehäuseabschnitt endet. Damit ist insbesondere gemeint, dass die Lagen auf den gekrümmten Gehäuseabschnitt stoßen, ein Anschmiegen über einen gewissen Gehäuseabschnitt (z.B. mehr als 10 mm oder 6 mm) überwiegend nicht vorliegt. Das bislang eingesetzte Verfahren des Anschmiegens der Enden der Lagen hat einen erhöhten Materialbedarf und eine verstärkte Deformation der außenliegenden Kanäle zur Folge gehabt. Durch die Bereitstellung unterschiedlicher Längen der Lagen ist ein direktes Auslaufen der Lagen an dem Gehäuse auch bei dessen gekrümmten Gestalt möglich.

Weiter ist vorteilhaft, dass die Lagen Berührpunkte mit dem Gehäuse bilden, wobei zumindest für einen Teil der Berührpunkte Abstände hin zu benachbarten Berührpunkten ungleich ausgeführt sind. Die ungleichmäßige Ausgestaltung der Abstände benachbarter Berührpunkte zueinander ist im Wesentlichen auch durch den Wickeltyp bzw. die Form des Verlaufs der Lagen beeinflusst. Eine solche Ausgestaltung der Berührpunkte hat insbesondere eine homogene, radiale Vorspannung und eine Reduktion der Kanaldeformationen im Randbereich zu Folge.

Schließlich wird auch ein Wabenkörper vorgeschlagen, bei dem die Metallfolien miteinander und mit dem Gehäuse Kontaktstellen bilden, die zusammen einen gesamten Kontaktbereich bestimmen, wobei bezüglich höchstens 50 % des Gesamtkontaktbereiches eine stoffschlüssige Verbindung ausgeführt ist. Bevorzugt sind Ausgestaltungen, bei der höchstens nur 30 % oder sogar nur höchstens 10% des Gesamtkontaktbereiches mit stoffschlüssigen Verbindungen ausgeführt ist.

Gerade bei der Ausgestaltung von im Wesentlichen parallel zueinander verlaufenden gradlinigen Kanälen werden eine Vielzahl von nahezu linienartigen Kontaktstellen unter den Metallfolien bzw. zwischen Metallfolie und dem Gehäuse gebildet. Diese Kontaktstellen stehen grundsätzlich zur Ausbildung von fügetechnischen Verbindungen zwischen den genannten Komponenten zur Verfügung, wobei die Gesamtheit dieser Kontaktstellen hier mit "Gesamtkontaktbereich" benannt wird. Sind die Kontaktstellen beispielsweise im Wesentlichen linienförmig ausgebildet, so ergibt sich der Gesamtkontaktbereich als die Summe der linienförmigen Kontaktstellen, so dass letztendlich eine Gesamtlänge angebbar wäre. Ergänzend sei noch darauf hingewiesen, dass der Anteil der Kontaktstellen der Metallfolien untereinander deutlich überwiegt, der Anteil der Kontaktstellen der Metallfolien mit dem Gehäuse liegt beispielsweise in einem Bereich kleiner 10 %, insbesondere bei etwa 5%.

Hier wird nun vorgeschlagen, dass von diesem Gesamtkontaktbereich höchstens 50 % tatsächlich mit einer stoffschlüssigen Verbindung ausgeführt sind, der Rest des Gesamtkontaktbereichs hierfür nicht genutzt wird, sondern durch den losen Kontakt der Komponenten zueinander ein Verschieben bzw. unterschiedliches thermisches Ausdehnungsverhalten ermöglicht ist. Die stoffschlüssige Verbindung ist bevorzugt als Lötverbindung ausgeführt, die im Rahmen eines Hartlöt-Prozesses generiert wurde. Die Anordnung der stoffschlüssigen Verbindungen bezüglich des Wabenkörpers ist unter Berücksichtigung der thermischen Belastung und der eingesetzten Materialien des Wabenkörpers frei wählbar. Insbesondere können die stoffschlüssigen Verbindungen in radialer, axialer und jeder beliebigen anderen Richtung des Wabenkörpers lokal definiert und unabhängig voneinander vorgesehen sein. Bevorzugt ist beispielsweise eine nur stirnseitige Anbindung aller Kontaktstellen über die ersten wenigen Millimeter (z.B. 6, 8 oder 10 mm) über den gesamten Querschnitt des Wabenkörpers, wobei hierfür bevorzugt ein Lotstreifen zwischen die Lagen bzw. zwischen die Lagen und das Gehäuse bei der Herstellung eingelegt wird. Je nach Größe des Wabenkörpers können auf diese Weise z.B. auch weniger als 30 % des Gesamtkontaktbereiches tatsächlich mit einer stoffschlüssigen Verbindung ausgeführt sein. Ebenso kann mittels Druckverfahren (tropfenförmige Applikation, z.B. so genannter "drop-on-demand"-, "bubble-jet"-, "continuous-jet"-Verfahren) eine exakte Applikation von Lot zu den gewünschten Kontaktstellen durchgeführt werden, wobei gerade mit solchen Verfahren auch weniger als 10 % des Gesamtkontaktbereiches mit einer stoffschlüssigen Verbindung ausgeführt werden können.

Gemäß einem weitem Aspekt der Erfindung wird ein Verfahren zur Herstellung eines Wabenkörpers mit zu mindestens 95% übereinstimmenden Kanalquerschnitten umfassend zumindest folgende Schritte vorgeschlagen:
a) Formen einer Mehrzahl von Lagen einer vorgegebenen Länge, wobei diese wenigstens eine zumindest teilweise strukturierte Metallfolie umfassen, so dass eine Vielzahl von Kanälen mit einem Kanalquerschnitt gebildet ist, und die Mehrheit der Lagen mit zueinander verschiedenen Längen ausgeführt ist;
b) Stapeln, zumindest eines Teils der Mehrzahl von Lagen aufeinander, so dass mindestens ein Stapel gebildet ist;
c) Umformen des mindestens einen Stapels, so dass ein gekrümmter Verlauf der Lagen entsteht;
d) Anordnen des mindestens einen Stapels in einem Gehäuse.
Das Verfahren eignet sich insbesondere zur Herstellung eines vorstehend erfindungsgemäß beschriebenen Wabenkörpers.

Bezüglich Schritt a) ist anzumerken, dass das Formen von Lagen insbesondere das Schneiden von Metallfolien, das Strukturieren von Metallfolien, das Stapeln von Metallfolien aufeinander, das Ausrichten von Metallfolien zueinander, das temporäre Verbinden von Metallfolien (z. B. mit einem Haftmittel oder Kleber) und andere Handlungen umfassen kann. Insbesondere wird durch Schritt a) mindestens eine Reihe von nebeneinander angeordneten Kanälen gebildet, wobei bevorzugt jeder Kanal teilweise von einer strukturierten und teilweise von einer glatten Metallfolie begrenzt ist.

Die geformten Lagen werden nun gemäße b) zumindest teilweise aufeinander gestapelt. Die Anzahl der Stapel kann dabei bevorzugt immer im Bereich von 1 bis 6 gewählt werden.

Nun kann gemäß Schritt c) das Umformen der Stapel vorgenommen werden. Dies kann beispielsweise auch in mehreren Stufen erfolgen, so dass beispielsweise zunächst jeder Stapel separat umgeformt, insbesondere umgebogen bzw. eingeschlagen wird, dann die Stapel zueinander positioniert werden und gemeinsam gewunden, miteinander verschlungen, gebogen oder in ähnlicher Weise umgeformt werden. Bevorzugt sind nach Schritt c) die Stapel bzw. die darin enthaltenen Lagen über ihre gesamte Länge mit einem gekrümmten Verlauf ausgeführt, wobei insbesondere Bereiche mit unterschiedlichem Krümmungsradius vorliegen.

Schließlich werden die Stapel entsprechend Schritt d) in einem Gehäuse angeordnet. Vor und/oder nach dem Anordnen des Stapels in dem Gehäuse können Zusatzstoffe im und/oder am Wabenkörper appliziert werden, wobei die Zusatzstoffe insbesondere Mittel zur Ausbildung stoffschlüssiger Verbindungen umfassen (wie hier z. B. Bindemittel, Haftmittel, Haftbegrenzer (z.B. Wachs, Öl,), Lot, etc.).

Weiter wird vorgeschlagen, dass Schritt b) so erfolgt, dass die Mehrzahl von Lagen eines Stapels versetzt zueinander angeordnet werden. Das heißt beispielsweise, dass benachbarte Lagen nicht nur mit einer unterschiedlichen Länge ausgeführt sein können, sondern dass diese auch zueinander versetzt angeordnet werden, also keine gemeinsame Abschlussebene bilden. Die Art und Weise des Versatzes ist wiederum von der Ausgestaltung des Gehäuses und der Strukturen der Metallfolien abhängig. Unter Umständen ist es dabei auch vorteilhaft, dass selbst die Metallfolien innerhalb einer Lage versetzt zueinander angeordnet sind.

Vorteilhaft ist auch, dass die Mehrzahl der Lagen zumindest während Schritt a) oder b) magnetisch fixiert werden. Infolge der unterschiedlichen Längen der Lagen bzw. des verwirklichten Versatzes der Lagen zueinander ist die Handhabung der Stapel bzw. der Lagen problematisch. Hier wird nun vorgeschlagen, dass die Lagen bzw. Metallfolien bzw. Stapel mittels wenigstens eines Magneten in definierten Positionen zueinander gehalten werden. Dies erlaubt den Transport und/oder die Lagerung der Lagen bzw. Stapel auch ohne Einsatz eines Haftmittels, wobei in gleichzeitig die hierfür eingesetzten Handhabungsgeräte für unterschiedliche Lagen und/oder Wabenkörper einsetzbar sind. Das Fixieren der Lagen kann durch magnetische Greifer, magnetische Unterlagen und dergleichen erfolgen.

Wie bereits angedeutet, kann Schritt c) mindestens zweistufig erfolgen, wobei es vorteilhaft ist, dass zumindest eine der folgenden Handlungen vorgenommen wird:
- Umklappen des mindestens einen Stapels;
- Ausrichten mehrerer Stapel zueinander;
- Verwinden mehrerer Stapel miteinander;
- Umformen des mindestens einen Stapels mit einem ersten Werkzeug bis zu einer ersten Ausdehnung und weiteres Umformen des mindestens einen Stapels mit wenigstens einem zweiten Werkzeug.

Die Vornahme der vorstehend genannten Handlungen ist insbesondere vorteilhaft bei Wabenkörpern, die letztendlich einen Durchmesser aufweisen, der größer als 150 mm, insbesondere größer 200 mm ist. Bei der zweistufigen Ausgestaltung des Wickelprozesses kann eine besonders schonende Herstellung mit nur sehr geringfügiger Deformierung der Kanäle und/oder unter Einsatz relativ geringer Kräfte verwirklicht werden.

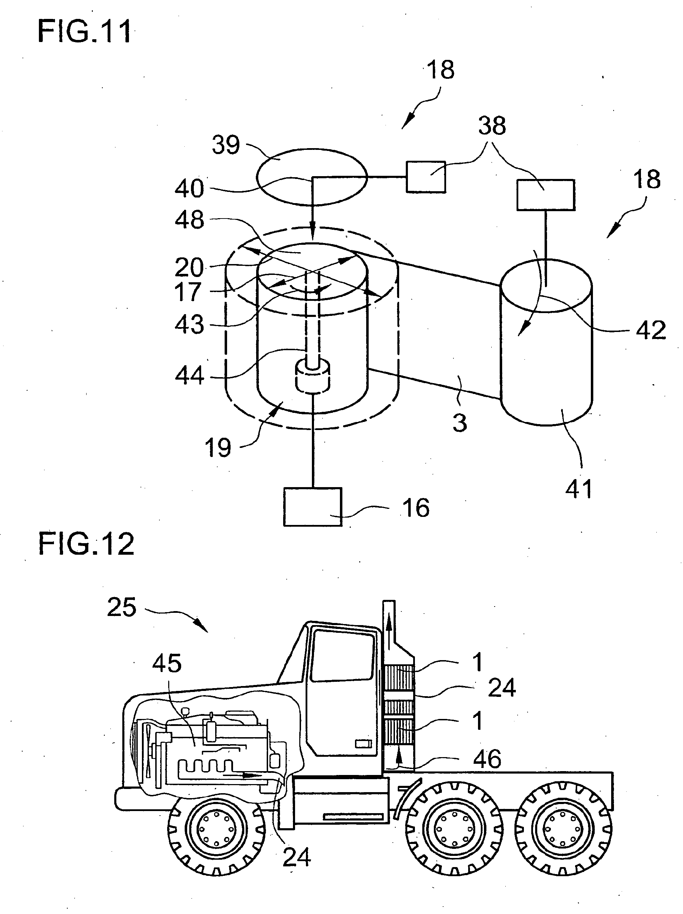

Dies soll nachfolgend für einen Wabenkörper erläutert werden, der spiralig gewickelt ist und (nicht zwingend) mit mehreren Lagen unterschiedlicher Länge gebildet wird. Für diesen Fall könnte folgendes Vorgehen vorteilhaft sein:
- Formen einer Lage, die wenigstens eine zumindest teilweise strukturierte Metallfolie umfasst, so dass eine Vielzahl von Kanälen gebildet ist,
- Fixieren der Lage in einem Endbereich mit einer Greifeinheit;
- Rotieren der Greifeinheit, so dass die Lage sich um die Greifeinheit herum anordnet und ein Wabenkörper mit zunehmenden Durchmesser bildet;
- Feststellen, dass der Wabenkörper eine erste Ausdehnung erreicht hat;
- Aktivieren von Mitteln umfassend wenigstens ein zweites Werkzeug oder Führungsmittel oder Antriebsmittel;
- weiteres Anlegen des Stapels an die bereits existierende Umfangsfläche des Wabenkörpers bis dieser den gewünschten Durchmesser erreicht hat.
In diesem Zusammenhang wird insbesondere auf die ergänzenden Erläuterungen zur Fig. 11 verwiesen. Das Feststellen der ersten Ausdehnung kann anhand eines Drehwinkels der Greifeinheit und/oder direkt am Wabenkörper vorgenommen werden.

Nach einer weiteren vorteilhaften Ausgestaltung des Verfahrens wird mit Schritt c) eine zylindrische Wabenstruktur mit einem Durchmesser gebildet, wobei die Wabenstruktur vor und nach dem Anordnen im Gehäuse eine Änderung des Durchmessers von höchstens 5 % aufweist. Bevorzugt liegt die Änderung des Durchmessers in einem Bereich kleiner 2 % (entspricht z.B. eine Durchmesserabweichung von weniger als 3 mm). Dies Veranschaulicht die Genauigkeit, mit der mit dem erfindungsgemäßen Verfahren eine Wabenstruktur mit einer vorbestimmten äußeren Kontur gebildet werden kann, so dass diese dem Gehäusequerschnitt sehr nahe kommt. Durch eine solche Annäherung der Kontur der Wabenstruktur an den Gehäusequerschnitt können (bei nicht runden Gehäusen) alle Randbereiche gleichmäßig ausgefüllt werden, wobei gleichzeitig eine Deformierung von Kanälen im Randbereich vermieden wird. Gleichwohl wird eine sichere Anlage der Enden der Lagen am Gehäuse, z.B. zur Ausbildung von fügetechnischen Verbindungen, gewährleistet.

Nach einer weiteren Ausgestaltung des Verfahrens erfolgt als Schritt e) eine Umformung des Wabenkörpers über dessen Umfang. Das heißt mit anderen Worten, dass nach Anordnung des Stapels in dem Gehäuse noch eine weitere, geringfügige, plastische, Verformung des Wabenkörpers vorgenommen wird, ein so genanntes "Kalibrieren". Dazu wird beispielsweise über den Umfang des Gehäuses gleichmäßig radial einwärts gerichtet Druck ausgeübt, so dass das Gehäuse auf einen gewünschten Durchmesser bzw. eine vorgegebenen Rundheit oder andere Formgenauigkeit kalibriert wird. Dabei kann gleichzeitig noch ein "Entspannen" bzw. "Entlasten" der Lagen bzw. Metallfolien im Inneren stattfinden, so dass wiederum die sichere Anlage der Enden der Lagen am Gehäuse gewährleistet ist.

Weiter wird vorgeschlagen, dass als Schritt f) regional begrenzte stoffschlüssige Verbindungen wenigstens zwischen den Metallfolien oder zwischen mindestens einer Metallfolie und dem Gehäuse erzeugt wird, wobei die Regionen in diversen Ebenen des Wabenkörpers unterschiedlich ausgeführt sind. Bevorzugt werden sowohl stoffschlüssige Verbindungen zwischen den Metallfolien als auch hin zum Gehäuse erzeugt.

Mit "regional begrenzten Verbindungen" ist insbesondere gemeint, dass der Wabenkörper Bereiche mit stoffschlüssigen Verbindungen und ohne stoffschlüssige Verbindungen zum Ausgleich von unterschiedlichen thermischen Ausdehnungsverhalten aufweist. Die Regionen können dabei großflächige bzw. großvolumige Bereiche des Wabenkörpers sein, beispielsweise ein sternförmiger Bereich oder ein Umfangsbereich hin zum Gehäuse, es ist jedoch ebenso möglich, dass eine Region auf eine geringe Anzahl von Kanälen begrenzt ist, beispielsweise weniger als 10 benachbart zueinander angeordnete Kanäle. Auch in Richtung eines Kanal können regional begrenzte stoffschlüssige Verbindungen vorliegen, so dass die den Kanal bildenden Metallfolien nicht über die gesamte Länge des Kanals miteinander stoffschlüssig verbunden sind. Bevorzugt ist wiederum eine Ausgestaltung des Wabenkörpers, wobei z.B. höchstens 10 % des Gesamtkontaktbereiches eine stoffschlüssige Verbindung aufweisen, insbesondere nur höchstens 5 %. Die stoffschlüssigen Verbindungen sind in diversen Ebenen unterschiedlich ausgeführt. Die Ebenen können sowohl in Richtung der Kanäle als auch quer dazu betrachtet werden. Grundsätzlich können dabei auch Ebenen vorliegen, in denen keine stoffschlüssigen Verbindungen angeordnet sind.

Bevorzugt wird ein vorstehend erfindungsgemäß beschriebener Wabenkörper bzw. ein Wabenkörper, der nach dem erfindungsgemäß beschriebenen Verfahren hergestellt wird, in Kombination mit einer Abgasanlage eines Automobils verwendet. Ganz und besonders bevorzugt wird eine Verwendung für Abgassysteme von Lastkraftwagen vorgeschlagen, wobei der Wabenkörper einen Durchmesser größer als 150 mm aufweist.

Die Erfindung sowie das technische Umfeld werden nachfolgend anhand der Figuren näher erläutert. Die Figuren zeigen auch besonders bevorzugte Ausführungsbeispiele der Erfindung, auf die diese jedoch nicht begrenzt ist. Weiter ist darauf hinzuweisen, dass die Figuren schematischer Natur sind und demnach regelmäßig nicht zur Veranschaulichung von Größenverhältnissen geeignet sind. Es zeigen:
- Fig. 1: Ein Ausführungsbeispiel für die Herstellung einer Lage für einen Wabenkörper;
- Fig. 2: den Transport einer Lage;
- Fig. 3: einen Stapel mehrer Lagen;
- Fig. 4: einen Wabenkörper mit gewundenen Lagen in einem Gehäuse;
- Fig. 5: ein Diagramm mit den Lagenlängen eines Stapels;
- Fig. 6: eine Darstellung zur Veranschaulichung der Berührpunkte der Lagen am Gehäuse;
- Fig. 7: eine Darstellung zur Veranschaulichung der technischen Probleme bei einem bekannten Herstellungsverfahren für einen Wabenkörper;
- Fig. 8: eine perspektivische Darstellung einer Ausführungsvariante des Herstellungsprozesses für einen Wabenkörper;
- Fig. 9: ein Detail eines Wabenkörpers;
- Fig. 10: eine Darstellung zur Veranschaulichung von Regionen mit stoffschlüssigen Verbindungen in einem Wabenkörper;
- Fig. 11: eine Vorrichtung zum zweistufigen Wickeln eines Wabenkörpers; und
- Fig. 12: eine Abgasanlage mit einem Wabenkörper

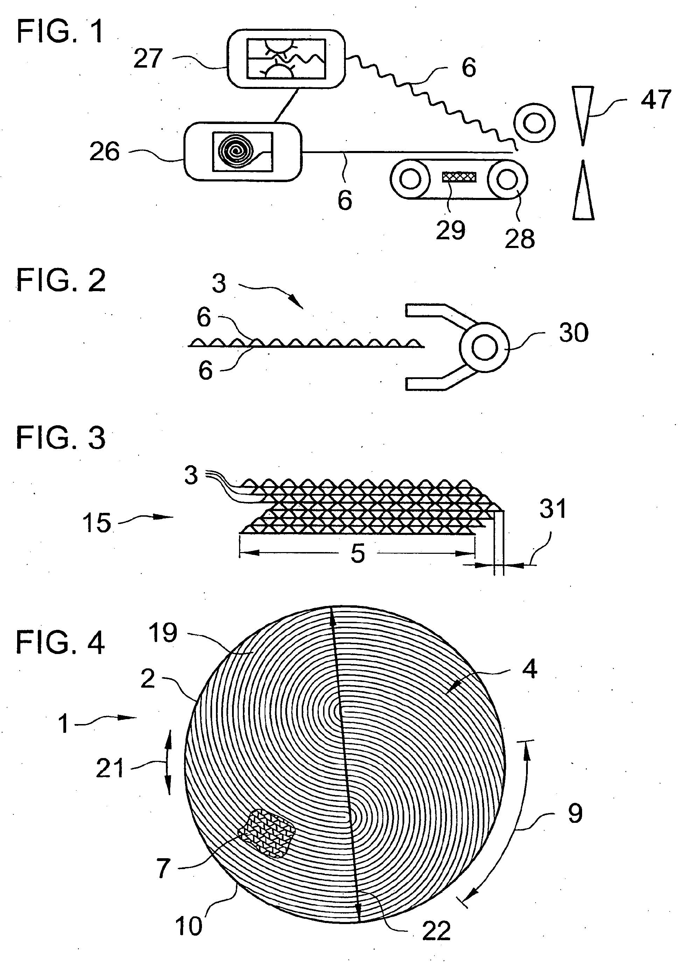

Die Fig. 1 bis 4 veranschaulichen ein Verfahren zur Herstellung eines Wabenkörpers, wobei die Fig. 1 das Formen von Lagen zeigt, Fig. 2 den Transport der Lage zu einem Stapel, wie er gemäß Fig. 3 aufgebaut wird, und schließlich veranschaulicht Fig. 4 die Anordnung zweier Stapel mit gekrümmten Verlauf in einem Gehäuse.

Die in Fig. 1 dargestellte Vorrichtung umfasst ein Glattband-Lieferwerk 26, in dem eine glatte Metallfolie 6 beispielsweise auf einer Haspel aufgerollt ist. Das Glattband-Lieferwerk 26 fördert eine glatte Metallfolie 6 einerseits zu einer Wellband-Anlage 27, in der aus der glatten Metallfolie 6 eine strukturierte Metallfolie 6 (beispielsweise auf dem Wege des Wellwalzens) erzeugt wird. Da für eine Lage 3 in dem dargestellten Beispiel eine strukturierte und eine glatte Metallfolie 6 zueinander kombiniert werden, liefert das Glattband-Lieferwerk 26 die glatte Metallfolie 6 über ein Förderband 28, das mit einem Magnet 29 zur Fixierung der glatten Metallfolie 6 ausgeführt ist. Die beiden Metallfolien 6 werden aufeinander angeordnet und gemeinsam einer Schneidvorrichtung 47 zugeführt, die aus den endlosen Metallfolien 6 Lagen 3 mit der gewünschten Länge formt.

Wie in den Fig. 2 und 3 veranschaulicht, wird die so gebildete Lage 3 umfassend eine vollständig strukturierte Metallfolie 6 und eine vollständig glatte Metallfolie 6 nun mittels eines Greifers 30, der bevorzugt ebenfalls Mittel zur magnetischen Fixierung der Lage 3 aufweist, zu einem Stapel 15 angeordnet. Mittels des Greifers 30 werden mehrere Lagen 3 (mit zumindest teilweise zueinander verschiedenen Länge 5) nun einzeln aufeinander gestapelt, wobei zusätzlich ein Versatz 31 der benachbart positionierten Lagen 3 zueinander realisiert wird. Bei der dargestellten Ausführungsvariante werden sieben (7) Lagen 3 zu einem Stapel 15 kombiniert.

Zwei dieser Stapel 15 werden nun zunächst separat umgeschlagen, so dass beide Enden der Lagen 3 auf einer Seite positioniert sind. Dann werden beide Stapel 15 miteinander verwunden und in das in der Fig. 4 dargestellte Gehäuse 2 eingeführt, so dass der gewünschte Wabenkörper 1 gebildet ist. Auf diese Weise umfasst der Wabenkörper 1 das Gehäuse 2 sowie die mit den Lagen 3 gebildete Wabenstruktur 19, wobei die Lagen 3 darin mit einem gekrümmten Verlauf 4 angeordnet sind. Die Enden der Lagen 3 stoßen über den Umfang 21 direkt an das Gehäuse 2, insbesondere auch dem gekrümmten Gehäuseabschnitt 9. Die Berührpunkte 10 der Lagen 3 im Bereich des Gehäuseabschnitts 2 sind bevorzugt zur Herstellung von fügetechnischen Verbindungen zwischen den Lagen 3 und dem Gehäuse 2 geeignet. Zur Veranschaulichung der Wabenstruktur 19 ist in Fig. 4 auch teilweise die Struktur mit Kanälen 7 veranschaulicht. °

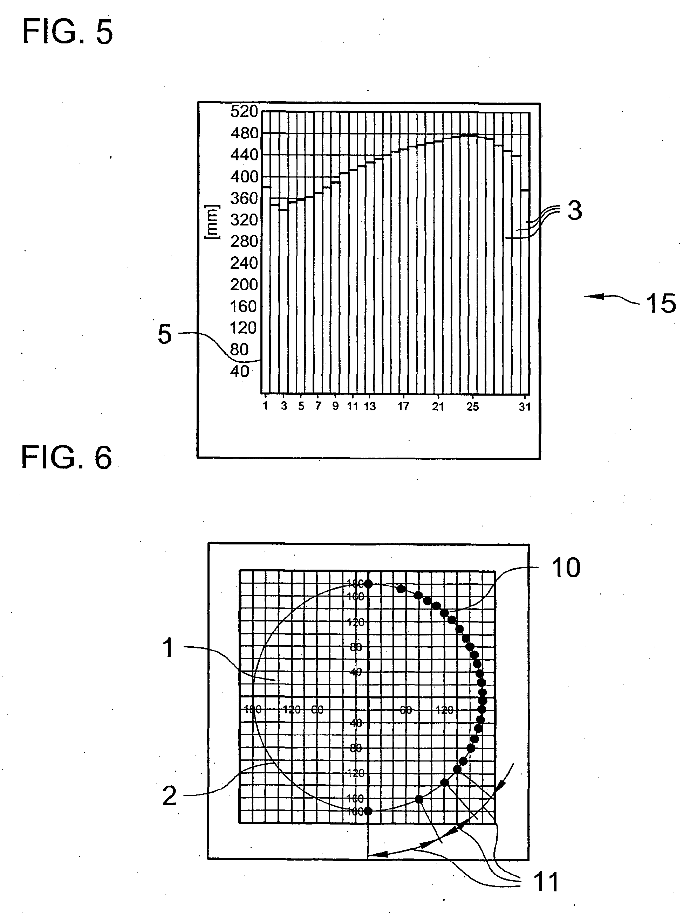

Fig. 5 zeigt ein Ausführungsbeispiel für die verschiedenen Längen 5 der Lagen 3 eines Wabenkörpers 1, der wie in Fig. 4 mit einem S-förmigen Verlauf 4 der Lagen 3 gestaltet ist. Die Länge 5 der Lagen 3 ist als Ordinate veranschaulicht, die Anzahl der Lagen 3 eines Stapels 15 über die Abszisse. Aus der Darstellung kann entnommen werden, dass keine Lage 3 zwei benachbarte Lagen 3 aufweist, die dieselbe Länge 5 wie sie selbst hat, insbesondere hat keine der benachbarten Lagen 3 dieselbe Länge 5 wie eine bestimmte Lage 3. Es ist auch erkennbar, dass zwischen der maximalen Länge 5 und der minimalen Länge 5 einer Lage 3 innerhalb eines Stapels 15 mehr als 20 mm, 50 mm oder sogar 100 mm liegen können. Wird nun der in Fig. 5 veranschaulichte Stapel 15 S-förmig gewunden, so bilden sich Berührpunkte 10 am Gehäuse 2 aus, wie es in Fig. 6 veranschaulicht ist. Auffällig ist dabei, dass die Berührpunkte 10 zueinander keinen gleich bleibenden sondern einen variierenden Abstand 11 zueinander ausbilden.

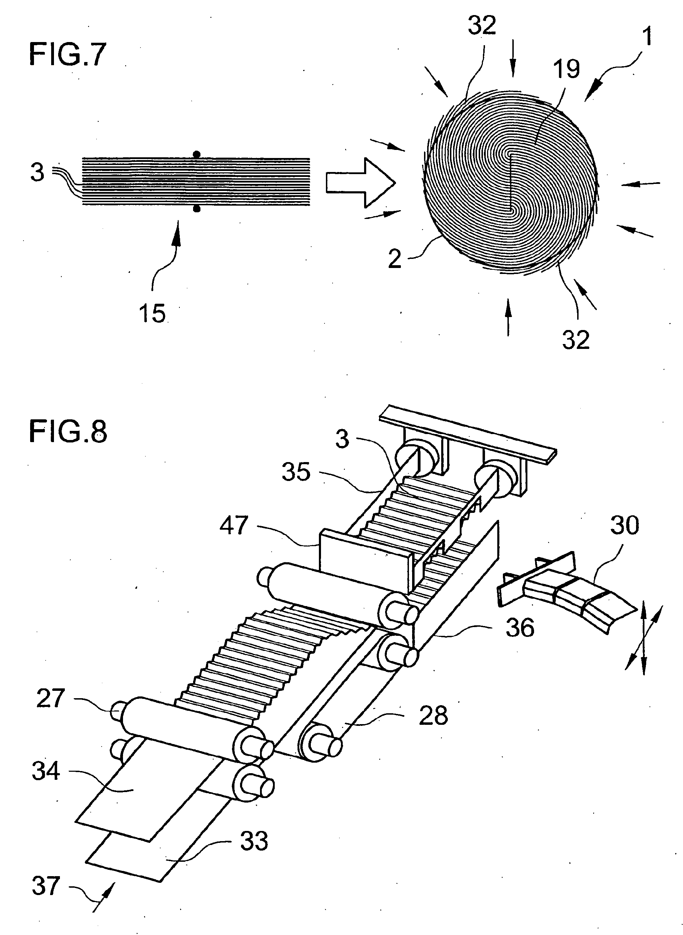

Fig. 7 veranschaulicht beispielhaft einen Formfehler, der bei bekannten Herstellungsmethoden aufgetreten ist. In der linken Darstellung in Fig. 7 wird ein Stapel 15 mit einer Mehrzahl von Lagen 3 eingesetzt, wobei die Lagen 3 mit einer einheitlichen Länge 5 ausgeführt sind. Nach dem Wickelvorgang wird jedoch eine Wabenstruktur 19 gebildet, die eine ovale Kontur hat. Möchte man diese Wabenstruktur 19 in ein zylindrisches Gehäuse 2 einfügen, müssen besondere Kräfte auf die überstehenden Deformationsbereiche 32 einwirken, wobei die dort gebildeten Kanäle deformiert werden. Dies wird mit dem erfindungsgemäßen Verfahren bzw. dem erfindungsgemäßen Wabenkörper vermieden.

Fig. 8 veranschaulicht eine Ausführungsvariante einer Herstellungslinie für Lagen 3 einer vorgegebenen Länge 5, die jeweils wenigstens eine zumindest teilweise strukturierte Metallfolie 6 umfassen. Dabei wird ein Wellband 34 mittels einer Wellband-Anlage 27 erzeugt und gleichzeitig mit einem Glattband 33, welches mittels eines Förderbandes 28 in Vorschubrichtung 37 transportiert wird, zu einer Schneidvorrichtung 47 transportiert. Mit der Schneidvorrichtung 47 werden Lagen 3 gleichzeitig vom Wellband 34 und Glattband 33 abgetrennt und in einer Zwischenablage 35 aufgefangen. Mittels eines in verschiedene Richtungen beweglichen und gegebenenfalls auch rotierbaren Greifers 30 wird die geschnittene Lage 3 aus der Zwischenablage 35 in die Stapelablage 36 übergeben, wobei dies mit der gewünschten Ausrichtung hin zur angrenzenden Lage 3 vorgenommen werden kann, beispielsweise mit einem bestimmten Versatz. Der so gebildete Stapel 15 kann schließlich mit dem Greifer 30 an eine weitere Bearbeitungsstation übergeben werden, wobei der Greifer 30 bevorzugt mit Mittel zur magnetischen Fixierung der Lagen 3 ausgeführt ist.

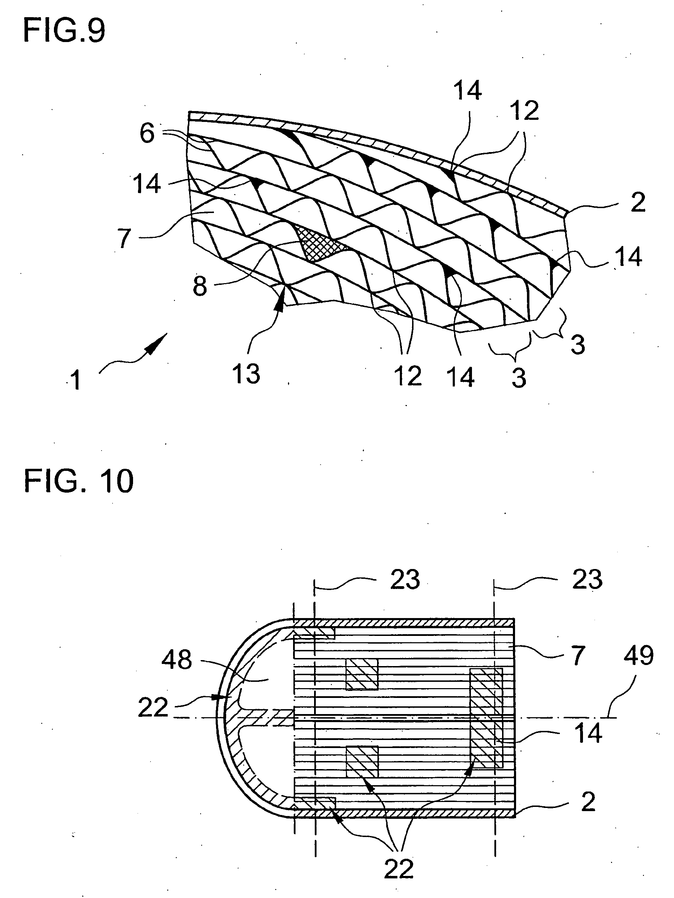

Fig. 9 zeigt ein Detail eines Wabenkörpers 1 der eine Vielzahl von Lagen 3 umfasst, die in einem Gehäuse 2 angeordnet sind. Die Lagen 3 sind jeweils mit einer glatten und einer gewellten Metallfolie 6 gebildet, so dass Kanäle 7 mit einem vorgegebenen Kanalquerschnitt 8 gebildet sind. Die Kanalquerschnitt 8 aller Kanäle 7, die vollständig von Metallfolien 6 gebildet sind, stimmen im Wesentlichen überein.

Weiter ist der Fig. 9 zu entnehmen, dass Regionen mit Verbindungen 14 vorgesehen sind. Bei der dargestellten Ausführungsvariante des Wabenkörpers 1 sind alle gewellten Metallfolien 6 an den Kontaktstellen 12 zum Gehäuse 2 mit einer Verbindung 14 ausgeführt, die eine Hartlöt-Verbindung ist. Auch wenn die Fig. 9 keine Verbindungen 14 hinsichtlich der Kontaktstellen 12 der glatten Metallfolien 6 hin zum Gehäuse 2 zeigt, so können diese doch zumindest teilweise mit einer ähnlichen Verbindung 14 ausgeführt sein. Auch im Inneren der Wabenstruktur 19 sind regional begrenzte Verbindungen 14 in Kontaktstellen 12 der Metallfolien 6 vorgesehen. Es ist zu erkennen, dass verschiedene Lagen 3 mit unterschiedlich vielen Verbindungen 14 ausgeführt sind, wobei dies mit regelmäßiger Entfernung oder auch variabel stattfinden kann. Diese regionale Ausbildung von fügetechnischen Verbindungen 14 ermöglicht, dass der Wabenkörper 1 aufgrund einer thermischen Wechselbeanspruchung relativ frei Expandieren und Kontrahieren kann, sowohl in Richtung des Verlaufs der Kanäle als auch in Richtung des Verlaufs der Lagen 3, sowie axial und radial bezüglich des Wabenkörpers 1.

Eine etwas größere regionale Ausbreitung von fügetechnischen Verbindungen 14 ist in der Fig. 10 veranschaulicht. Der dargestellte Wabenkörper 1 weist im Bereich einer Stirnseite 48 eine erste Region 22 mit Verbindungen 14 auf, wobei diese Region 22 im Wesentlichen nahe des Gehäuses 2 angeordnet ist und sich in einem Teilbereich radial einwärts ausweitet. Diese stirnseitige Region 22 erstreckt sich jedoch nicht über die gesamte Tiefe des Wabenkörpers 1 in Richtung der Achse 49, sondern nur über einen Teil davon. Zusätzlich sind in innen liegenden Bereichen des Wabenkörpers 1 weitere Regionen 22 mit Verbindungen 14 gebildet. In der Darstellung in Fig. 10 sind zwei Ebenen 23 senkrecht zur Achse 49 angedeutet, wobei die Regionen 22 in den dargestellten Ebenen 23 des Wabenkörpers 1 unterschiedlich ausgeführt sind.

Fig. 11 zeigt eine Vorrichtung zum spiraligen Aufwickeln mindestens einer Lage 3 zu einem Wabenkörper 1. Die Lage 3 wird dabei von einem Lagenreservoir 41 hin zu einem Dorn 44 geführt, welcher ein Ende der Lage 3 fixiert. Der Dorn 44 ist Teil eines ersten Werkzeugs 16, welches eine Rotation 43 des Domes 44 um seine eigene Achse ermöglicht. Bei einer ersten Stufe des Wickelprozesses ist das Lagenreservoir 41 ortsfest positioniert, und die Ausbildung des Wabenkörpers 1 erfolgt ausschließlich aufgrund der Rotation 43 des Doms 44. Bei Erreichen einer vorgegebenen Ausdehnung 17, beispielsweise einer Ausdehnung 17 im Bereich von 50 mm, wird ein zweites Werkzeug 18 hinzugeschaltet, um den Wabenkörper 1 bis zu seinem letztendlich gewünschten Durchmesser 20 weiter aufzubauen.

Die Fig. 11 zeigt zwei (2) weitere zweite Werkzeuge 18, die einzeln oder in Kombination, allein oder zur Unterstützung des ersten Werkzeugs 16, zum Einsatz gelangen können. Das oben dargestellte zweite Werkzeug 18 umfasst einen Stempel 39, der beispielsweise durch eine Hubbewegung 40 mit einer der Stirnseiten 48 der Wabenstruktur 19 in Eingriff bzw. Anlage gebracht wird. Bevorzugt ist dieses zweite Werkzeug 18 mit einem Antrieb 38 ausgeführt, so dass der Stempel 39 synchron zum Dorn 44 rotieren kann. Auf diese Weise werden die für die Rotation der Wabenstruktur 19 erforderlichen Kräfte auf mehrere Antriebe 38 bzw. auf eine größere Fläche der Stirnseite(n) 48 der Wabenstruktur 19 verteilt, so dass auch bei großer werdender Ausdehnung 17 eine gleichmäßige Anordnung der Lage 3 um die bereits gebildete Wabenstruktur 19 gewährleistet ist. Der Stempel 39 kann auch als Teil der Unterlage bzw. im Umfangsbereich des Domes 44 vorgesehen sein. Darüber hinaus ist auch möglich, dass der Stempel 39 mit einer Mehrzahl von Vertiefungen ausgeführt ist, die beispielsweise in die Kanäle 7 der bereits gebildeten Wabenstruktur 19 eingreifen. Darüber hinaus können auch gleichwirkende Mittel, wie weiter Stifte, Magnetplatten, etc. für einen großräumigen Krafteinleitungsraum zum Einsatz gelangen.

Weiter ist auch möglich, mit dem Lagenreservoire 41 selbst ein zweites Werkzeug 18 zu bilden. Dabei kann das Lagenreservoir 41 seine Relativlage zu der gebildeten Wabenstruktur 19 verändern, insbesondere um diese kreisen, wobei der Radius hin zum Dorn 44 veränderbar ist. Damit kann eine Laufbahn 42 beschrieben werden, bei der das Lagenreservoir 41 (ähnlich einer Spirale) immer weiter um die Wabenstruktur 19 herumläuft und so die Lage 3 anlegt. Zur Ausführung dieser Laufbahn 42 und/oder zur Realisierung einer Eigenrotation des Lagenreservoirs 41 kann auch dieses zweite Werkzeug 18 mit einem Antrieb 38 ausgeführt sein.

Bevorzugt arbeiten die ersten und zweiten Werkzeuge 16 und 18 in einer geregelten, aufeinander abgestimmten Weise. Zusätzlich können Mittel zur Bestimmung der aktuellen Ausdehnung 17, der Positionierung des Stempels 39 und/oder der Erzeugung von Relativbewegungen der zweiten Werkzeuge 18 zu dem ersten Werkzeug 16 vorgesehen sein.

Die Fig. 12 veranschaulicht die bevorzugte Verwendung eines hier beschriebenen Wabenkörpers 1. Dargestellt ist ein Automobil 25 in Form eines Lastkraftwagens mit einer Verbrennungskraftmaschine, die als dieselbetriebener Motor 45 ausgeführt ist. Die im Motor 45 erzeugten Abgase werden über eine Abgasanlage 24 in Strömungsrichtung 46 mehreren Wabenkörper 1 unterschiedlicher Funktion zugeführt, bevor die gereinigten Abgase schließlich in die Umgebung abgegeben werden. Bei derartigen Automobilen 25 werden insbesondere Wabenkörper 1 mit einem Durchmesser größer 150 mm eingesetzt. Gerade für diese Wabenkörper 1 sind die hier beschriebenen Wabenkörper 1 und Verfahren zu dessen Herstellung besonders gut geeignet.

### Bezugszeichenliste

- 1: Wabenkörper
- 2: Gehäuse
- 3: Lage
- 4: Verlauf
- 5: Länge
- 6: Metallfolie
- 7: Kanal
- 8: Kanalquerschnitt
- 9: Gehäuseabschnitt
- 10: Berührpunkt
- 11: Abstand
- 12: Kontaktstelle
- 13: Gesamtkontaktbereich
- 14: Verbindung
- 15: Stapel
- 16: erstes Werkzeug
- 17: Ausdehnung
- 18: zweites Werkzeug
- 19: Wabenstruktur
- 20: Durchmesser
- 21: Umfang
- 22: Region
- 23: Ebene
- 24: Abgasanlage
- 25: Automobil
- 26: Glattband-Lieferwerk
- 27: Wellband-Anlage
- 28: Förderband
- 29: Magnet
- 30: Greifer
- 31: Versatz
- 32: Deformationsbereich
- 33: Glattband
- 34: Wellband
- 35: Zwischenablage
- 36: Stapelablage
- 37: Vorschubrichtung
- 38: Antrieb
- 39: Stempel
- 40: Hubbewegung
- 41: Lagenreservoir
- 42: Laufbahn
- 43: Rotation
- 44: Dorn
- 45: Motor
- 46: Strömungsrichtung
- 47: Schneidvorrichtung
- 48: Stirnseite
- 49: Achse

## Patentansprüche

1. Wabenkörper (1) umfassend ein Gehäuse (2) und eine Mehrzahl Lagen (3) mit gekrümmten Verlauf (4) und einer vorgegebenen Länge (5), die jeweils wenigstens eine zumindest teilweise strukturierte Metallfolie (6) umfassen, so dass eine Vielzahl von Kanälen (7) mit einem Kanalquerschnitt (8) gebildet ist, bei dem die Mehrheit der Lagen (3) mit zueinander verschiedenen Längen (5) so ausgeführt ist, dass der Kanalquerschnitt (8) von mindestens 95% der Kanäle (7) übereinstimmt.

2. Wabenkörper (1) nach Anspruch 1, **dadurch gekennzeichnet, dass** die Mehrzahl der Lagen (3) stoffschlüssig untereinander und mit dem Gehäuse (2) verbunden sind.

3. Wabenkörper (1) nach Anspruch 1 oder 2, **dadurch gekennzeichnet, dass** die Enden der Lagen (3) über den Umfang (21) direkt an das Gehäuse (2), insbesondere auch an gekrümmte Gehäuseabschnitte (9), stoßen und die sich daraus ergebenden Berührpunkte (19) bevorzugt mit fügetechnischen Verbindungen ausgeführt sind.

4. Wabenkörper (1) nach einem der vorhergehenden Ansprüche, **dadurch gekennzeichnet, dass** die Mehrheit der Metallfolien (6) mit zueinander verschiedenen Längen (5) ausgeführt ist.

5. Wabenkörper (1) nach einem der vorhergehenden Ansprüche, **dadurch gekennzeichnet, dass** die Lagen (3) Berührpunkte (10) mit dem Gehäuse (2) bilden, wobei zumindest für einen Teil der Berührpunkte (10) Abstände (11) hin zu benachbarten Berührpunkten (10) ungleich ausgeführt sind.

6. Wabenkörper (1) nach einem der vorhergehenden Ansprüche, **dadurch gekennzeichnet, dass** die Metallfolien (6) miteinander und mit dem Gehäuse (2) Kontaktstellen (12) bilden, die zusammen einen Gesamtkontaktbereich (13) bestimmen, wobei bezüglich höchstens 50 % des Gesamtkontaktbereiches (13) eine stoffschlüssige Verbindung (14) ausgeführt ist.

7. Verfahren zur Herstellung eines Wabenkörpers (1) mit zu mindestens 95% übereinstimmenden Kanalquerschnitten umfassend zumindest folgende Schritte:
a) Formen einer Mehrzahl von Lagen (3) einer vorgegebenen Länge (5), wobei diese jeweils wenigstens eine zumindest teilweise strukturierte Metallfolie (6) umfassen, so dass eine Vielzahl von Kanälen (7) mit einem Kanalquerschnitt (8) gebildet ist, und die Mehrheit der Lagen (3) mit zueinander verschiedenen Längen (5) ausgeführt ist;
b) Stapeln zumindest eines Teils der Mehrzahl von Lagen (3) aufeinander, so dass mindestens ein Stapel (15) gebildet ist;
c) Umformen des mindestens einen Stapels (15), so dass ein gekrümmter Verlauf (4) der Lagen (3) entsteht;
d) Anordnen des mindestens einen Stapels (15) in einem Gehäuse (2).

8. Verfahren nach Anspruch 7, bei dem Schritt b) so erfolgt, dass die Mehrzahl von Lagen (3) eines Stapels (15) versetzt zueinander angeordnet werden.

9. Verfahren nach Anspruch 7 oder 8, bei dem die Mehrzahl der Lagen (3) zumindest während Schritt a) oder b) magnetisch fixiert werden.

10. Verfahren nach einem der Ansprüche 7 bis 9, bei dem Schritt c) mindestens zweistufig erfolgt.

11. Verfahren nach Anspruch 10, bei dem zumindest eine der folgenden Handlungen vorgenommen wird:
- Umklappen des mindestens einen Stapels (15);
- Ausrichten mehrerer Stapel (15) zueinander;
- Verwinden mehrerer Stapel (15) miteinander;
- Umformen des mindestens einen Stapels (15) mit einem ersten Werkzeug (16) bis zu einer ersten Ausdehnung (17) und weiteres Umformen des mindestens einen Stapels (15) mit wenigstens einem zweiten Werkzeug (18).

12. Verfahren nach einem der Ansprüche 7 bis 11, bei dem mit Schritt c) eine zylindrische Wabenstruktur (19) mit einem Durchmesser (20) gebildet wird, wobei die Wabenstruktur (19) vor und nach dem Anordnen im Gehäuse (2) eine Änderung des Durchmessers (20) von höchstens 5% aufweist.

13. Verfahren nach einem der Ansprüche 7 bis 12, bei dem als Schritt e) eine Umformung des Wabenkörpers (1) über dessen Umfang (21) erfolgt.

14. Verfahren nach einem der Ansprüche 7 bis 13, bei dem als Schritt f) regional begrenzte stoffschlüssige Verbindungen (14) wenigstens zwischen den Metallfolien (6) oder zwischen mindestens einer Metallfolie (6) und dem Gehäuse (2) erzeugt werden, wobei die Regionen (22) in diversen Ebenen (23) des Wabenkörpers (1) unterschiedlich ausgeführt sind.

15. Verfahren nach einem der Ansprüche 7 bis 14, bei dem als Schritt f) stoffschlüssige Verbindungen (14) wenigstens zwischen den Metallfolien (6) oder zwischen mindestens einer Metallfolie (6) und dem Gehäuse (2) ausgeführt werden.

16. Verwendung eines Wabenkörpers nach Anspruch 1 bis 6 oder eines Wabenkörpers (1) hergestellt nach einem Verfahren gemäß den Ansprüchen 7 bis 15 in Kombination mit einer Abgasanlage (24) eines Automobils (25).

## Claims

1. A honeycomb body (1) comprising a housing (2) and a plurality of layers (3) with a curved profile (4) and a predetermined length (5), which each comprise at least one at least partially structured metal foil (6), so as to form a multiplicity of passages (7) with a passage cross section (8), in which the majority of the layers (3) are designed to have different lengths (5) than one another in such a manner, that the passage cross section (8) of at least 95% of the passages (7) is identical.

2. The honeycomb body (1) as claimed in claim 1, **characterized in that** the majority of the layers (3) are connected cohesively to one another and to the housing (2).

3. The honeycomb body (1) as claimed in claim 1 or 2, **characterized in that** the end of the layers (3) butt directly against the housing (2) over the circumference (21), in particular including the curved housing section (9), the so formed touching points (10) are preferably suitable for the production of connections by a joining technique.

4. The honeycomb body (1) as claimed in one of the preceding claims, **characterized in that** the majority of the metal foils (6) are designed with different lengths (5) than one another.

5. The honeycomb body (1) as claimed in one of the preceding claims, **characterized in that** the layers (3) form touching points (10) with the housing (2), distances (11) to adjacent touching points (10) being designed to be unequal for at least some of the touching points (10).

6. The honeycomb body (1) as claimed in one of the preceding claims, **characterized in that** the metal foils (6) form contact locations (12) with one another and with the housing (2), which contact locations (12) together determine an overall contact region (13), with a cohesive connection (14) being formed for at most 50% of the overall contact region (13).

7. A process for producing a honeycomb body (1), in which the passage cross sections (8) of at least 95% of the passages (7) are identical, comprising at least the following steps:
a) shaping a plurality of layers (3) of a predetermined length (5), these layers in each case comprising at least one at least partially structured metal foil (6), so as to form a multiplicity of passages (7) having a passage cross section (8), and the majority of the layers (3) being designed with different lengths (5) than one another;
b) stacking at least some of the plurality of layers (3) on top of one another so as to form at least one stack (15);
c) deforming the at least one stack (15) so as to produce a curved profile (4) of the layers (3);
d) arranging the at least one stack (15) in a housing (2).

8. The process as claimed in claim 7, in which step b) is carried out in such a way that the plurality of layers (3) of a stack (15) are arranged offset with respect to one another.

9. The process as claimed in claim 7 or 8, in which the plurality of layers (3) are magnetically fixed at least during step a) or b).

10. The process as claimed in one of claims 7 to 9, in which step c) is carried out in at least two stages.

11. The process as claimed in claim 10, in which at least one of the following actions is carried out:
- folding over the at least one stack (15);
- aligning a plurality of stacks (15) with respect to one another;
- intertwining a plurality of stacks (15);
- deforming the at least one stack (15) using a first tool (16) as far as a first extent (17) and deforming the at least one stack (15) further using at least one second tool (18).

12. The process as claimed in one of claims 7 to 11, in which step c) is used to form a cylindrical honeycomb structure (19) with a diameter (20), the honeycomb structure (19) having a change in diameter (20) of at most 5% before and after being arranged in the housing (2).

13. The process as claimed in one of claims 7 to 12, in which a deformation of the honeycomb body (1) over its circumference (21) is carried out as step e).

14. The process as claimed in one of claims 7 to 13, in which regionally delimited cohesive connections (14) are produced at least between the metal foils (6) or at least between a metal foil (6) and the housing (2), the regions (22) being designed differently in various planes (23) of the honeycomb body (1).

15. The process as claimed in one of claims 7 to 14, in which as step f) cohesive connections (14) are produced at least between the metal foils (6) or between at least one metal foil (6) and the housing (2).

16. The use of the honeycomb body as claimed in claims 1 to 6 or of a honeycomb body (1) produced by the process as claimed in claims 7 to 15 in combination with an exhaust system (24) of an automobile (25).

## Revendications

1. Corps en nids d'abeilles (1), comprenant un boîtier (2) et une pluralité de couches (3) ayant une allure courbée (4) et une longueur prédéterminée (5) qui comprennent respectivement au moins une feuille métallique au moins structurée partiellement (6), de sorte qu'une multiplicité de canaux (7) soit formée avec une section transversale de canal (8), où la majorité des couches (3) avec des longueurs (5) différentes les unes par rapport aux autres, est réalisée de manière telle, que la section transversale de canal (8) d'au moins 95% des canaux (7) se correspond.

2. Corps en nids d'abeilles (1) selon la revendication 1, **caractérisé en ce que** la pluralité des couches (3) sont reliées de façon matériellement jointive entre elles et avec le boîtier (2).

3. Corps en nids d'abeilles (1) selon la revendication 1 ou 2, **caractérisé en ce que** les extrémités des couches (3) butent au dessus de la circonférence (21) directement contre le boîtier (2), notamment aussi contre des sections de boîtier courbées (9) et les points de contact (19) qui en ressortent sont réalisés de préférence avec des liaisons par technique de jointoiement.

4. Corps en nids d'abeilles (1) selon l'une des revendications précédentes, **caractérisé en ce que** la majorité des feuilles métalliques (6) est réalisée avec deux longueurs (5) différentes l'une par rapport à l'autre.

5. Corps en nids d'abeilles (1) selon l'une des revendications précédentes, **caractérisé en ce que** les couches (3) forment des points de contact (10) avec le boîtier (2), au moins pour une partie des points de contact (10), des écarts divers (11) étant réalisés de manière disproportionnée jusqu'à des points de contact adjacents (10).

6. Corps en nids d'abeilles (1) selon l'une des revendications précédentes, **caractérisé en ce que** les feuilles métalliques (6) forment entre elles et avec le boîtier (2) des points de contact (12) qui déterminent communément une région de contact totale (13), une liaison matériellement jointive (14) n'étant réalisée au maximum qu'avec 50% de la région de contact totale (13).

7. Procédé destiné à la fabrication d'un corps en nids d'abeilles (1), avec jusqu'au moins 95 % de sections de canal qui se correspondent, comprenant au moins les étapes suivantes :
a) Formation d'une pluralité de couches (3) d'une longueur prédéterminée (5), celles-ci comprenant respectivement au moins une feuille métallique (6) au moins partiellement structurée, de sorte qu'une multiplicité de canaux (7) avec une section transversale de canal (8) soit formée et en ce que la majorité des couches (3) étant réalisée avec des longueurs différentes les unes par rapport aux autres (5) ;
b) Empilage d'au moins une partie de la pluralité de couches (3), les unes sur les autres, de sorte qu'au moins une pile (15) soit formée ;
c) Transformation de l'au moins une pile (15), de sorte qu'une allure courbée (4) des couches (3) soit créée ;
d) Agencement de l'au moins une pile (15) dans un boîtier (2).

8. Procédé selon la revendication 7, où l'étape b) est effectuée de manière telle que la pluralité des couches (3) d'une pile (15) sont agencées de façon décalée les unes par rapport aux autres.

9. Procédé selon la revendication 7 ou 8, dans lequel la pluralité des couches (3) est fixée au moins durant l'étape a) ou b) de manière magnétique.

10. Procédé selon l'une des revendications 7 à 9, dans lequel l'étape c) est effectuée au moins en deux étapes.

11. Procédé selon la revendication 10, dans lequel au moins un des actes suivants est entrepris :
- Rabattement de l'au moins une pile (15) ;
- Alignement de plusieurs piles (15) les unes par rapport aux autres ;
- Enlacement d'une pluralité de piles (15) les unes avec les autres ;
- Transformation de l'au moins une pile (15) avec un premier outil (16) jusqu'à une première extension (17) et transformation ultérieure de l'au moins une pile (15) avec au moins un deuxième outil (18).

12. Procédé selon l'une des revendications 7 à 11, dans lequel une structure en nids d'abeilles cylindrique (19) est formée avec un diamètre (20) dans l'étape c), la structure en nids d'abeilles (19) présentant avant et après l'agencement dans le boîtier (2) une modification du diamètre (20) d'au maximum 5 %.

13. Procédé selon l'une des revendications 7 à 12, dans lequel comme étape e) une transformation du corps en nids d'abeilles (1) est effectuée sur sa circonférence (21).

14. Procédé selon l'une des revendications 7 à 13, dans lequel comme étape f) des liaisons matériellement jointives limitées régionalement (14) sont créées au moins entre les feuilles métalliques (6) ou entre au moins une feuille métallique (6) et le boîtier (2), les régions (22) étant réalisées de façon différente dans des plans divers (23) du corps en nids d'abeilles (1).

15. Procédé selon l'une des revendications 7 à 14, dans lequel comme étape f) des liaisons matériellement jointives (14) sont effectuées au moins entre les feuilles métalliques (6) ou entre au moins une feuille métallique (6) et le boîtier (2).

16. Utilisation d'un corps en nids d'abeilles selon la revendication 1 à 6 ou d'un corps en nids d'abeilles (1), fabriqué d'après un procédé selon les revendications 7 à 15 en combinaison avec une installation de gaz d'échappement (24) d'un automobile (25).
